Europäisches Patentamt

European Patent Office

Office européen des brevets

(11) Veröffentlichungsnummer: **0 066 116**
**B2**

(12) **NEUE EUROPÄISCHE PATENTSCHRIFT**

(45) Veröffentlichungstag der neuen Patentschrift:
23.01.91

(51) Int. Cl.⁵: **A 01 K 1/015**

(21) Anmeldenummer: **82104009.4**

(22) Anmeldetag: **08.05.82**

(54) **Verfahren zum Herstellen von Katzenstreu.**

(30) Priorität: **29.05.81 DE 3121403**

(43) Veröffentlichungstag der Anmeldung:
**08.12.82 Patentblatt 82/49**

(45) Bekanntmachung des Hinweises auf die
Patenterteilung:
**02.04.86 Patenblatt 86/14**

(45) Bekanntmachung des Hinweises auf die
Entscheidung u¨ber den Einspruch:
**23.01.91 Patentblatt 91/04**

(84) Benannte Vertragsstaaten:
**AT BE CH DE FR GB IT LI LU NL SE**

(56) Entgegenhaltungen:
CH-A- 551 344
DE-A-1 592 699
DE-A-2 037 252
DE-A-2 422 574
DE-A-2 638 957
DE-A-2 725 687
DE-B-2 620 709
DE-B-2 902 079
US-A-3 770 475
US-A-4 263 873
US-A-4 278 047

(73) Patentinhaber: **MARS INCORPORED**
**Westgate Park 1651 Old Meadow Road**
**McLean Virginia 22102 (US)**

(72) Erfinder: **Dürbye, Hartmut**
**Am Rüstkamp 22**
**D-2816 Kirchlinteln-Luttum (DE)**

(74) Vertreter: **Goddar, Heinz J., Dr. et al**
**FORRESTER & BOEHMERT Widenmayerstrasse**
**4/I**
**D-8000 München 22 (DE)**

Courier Press, Leamington Spa, England.

EP 0 066 116 B2

**Beschreibung**

Die Erfindung betrifft ein Verfahren zur Herstellung von Katzenstreu nach dem einleitenden Teil des Patentanspruches 1.

Bei bekannten Materialien zur Herstellung von Tierstreu handelt es sich meist um Naturprodukte mineralischen oder organischen Ursprungs, wie Bimsstein, Tonmineralien wie beispielsweise Tonerde, gebrannter Ton und ähnliches, Holzmehle, Torf und Kieselgur, die auf Grund ihrer porenaufweisenden Struktur die Eigenschaft besitzen, Flüssigkeit in diesen Poren aufzunehmen. So zeigt beispielsweise die DE—B—2 620 709 eine aus Sägemehl, Torf und Erde bestehende Tierstreu der vorstehend beschriebenen Art. Die dort verwendeten organischen Materialien führen dazu, dass die Tierstreu eine verhältnismässig ungünstige Druckfestigkeit hat, für Mikroorganismen auf Grund ihrer organischen Struktur eine gute, im Haushalt und dergleichen unerwünschte Brutstätte bietet und zudem ein ausserordentlich geringes spezifisches Gewicht hat, so dass beispielsweise Katzen eine derartige Tierstreu leicht infolge Hängenbleibens an den Pfoten in unerwünschter Weise in der Wohnung verteilen.

Demgegenüber ist aus der DE—B—2 902 079 bereits ein Verfahren der eingangs genannten Art bekannt beiden als poröses Ausgangsmaterial mit Porenstruktur Calciumsilikatathydratgranulat eingesetzt wird, welches einen ph-Wert von im allgemeinen 8, 7 bis 10 aufweist. Die danach hergestellte bekannte Tierstreu ist form- und konsistenzbeständig und wirkt bakterizid. Sie hat sich in der Praxis im Prinzip durchaus bewährt, jedoch stellt sich bei längerem Gebrauch der bekannten Tierstreu eine ungünstige Geruchsentwicklung ein, so dass sie häufig gewechselt werden muss, obwohl die Absorptionseigenschaften des Materials kaum ausgeschöpft worden sind.

Der Erfindung liegt die Aufgabe zugrunde, das Verfahren der eingangs genannten Art dahingehend weiterzubilden, dass die Geruchsbindung der Tierstreu bei Anwendung als Katzenstreu verbessert und hierdurch ein langerer Gebrauch der Tierstreu unter Ausschöpfung der Absorptionseigenschaften des porösen Materials ermöglicht wird.

Erfindungsgemäss wird diese Aufgabe durch die im Kennzeichen des Patentanspruches 1 aufgeführten Merkmale gelöst. Besonders bevorzugte Ausführungsformen der Erfindung ergeben sich aus den das erfindungsgemässe Verfahren betreffenden Unteransprüchen.

Durch die neuartige Behandlung an sich bekannter poröser, anorganischer Materialien mit den pH-Wert auf einen schwach sauren Bereich absenkenden Materialien lässt sich überraschenderweise eine unerwartet gute Geruchsbindung erzielen. Da Katzenurin, welcher schwach sauer ist, durch die neutralen bis schwach basischen Absorptionsmittel nicht an der Geruchsentwicklung nach längerem Gebrauch gebindert wird, war es völlig unerwartet, dass durch Absenken des pH-Werts auf einen schwach sauren Bereich, wie erfindungsgemäss vorgeschlagen, die resultierende Geruchsbindung eintritt. Der Katzenstreu können auch weitere Deodorierungsmittel, Parfumöle oder dergleichen, zugesetzt werden Gegebenenfalls können bei der erfindungsgemäß hergestellten Katzenstreu auch Farbindikatorsysteme zugesetzt werden, welche einen entsprechenden Verbrauch der Katzenstreu anzeigen.

Aus der US—A—4 263 873 ist es zwar bekannt, bei Tierstreu die Ammoniakentwicklung und die dadurch verursachte Geruchsbelästigung durch Absenken des pH-Wertes in den sauren Bereich zu verringern, jedoch soll dabei der pH-Wert soweit abgesenkt werden, wie dies für die Tiere noch akzeptabel ist, vorzugsweise auf 1 bis 5,5; ein Hinweis auf den beim erfindungsgemäßen Verfahren vorgesehenen optimalen Einstellbereich von 5,8 bis 6,2 findet sich hier nicht.

Nachstehend ist die Erfindung anhand eines Ausführungsbeispiels im einzelnen erläutert:

Beispiel
Herstellung von als Katzenstreu geeignetem Calciumsilikathydratgranulat:

50,4 bis 57,0 Gew.-% Quarzmehl mit einer Korngrösse unter 100 nm, 29,0 bis 42,0 Gew.-% gebrannter Kalk und 7,6 bis 16,5 Gew.-% Kalkhydrat wurden, wie in der DE—B—29 02 079 beschreiben, zu granuliertem Calciumsilikathydrat verarbeitet.

Das Fertigprodukt weist einen alkalischen pH-Wert im Bereich zwischen 8,7 bis 10 auf.

Behandlung des Calciumsilikathydratgranulats zur Absenkung des pH-Werts:

Das derart hergestellte Calciumsilikathydratgranulat wird auf eine Korngrösse zwischen etwa 2 bis 5 mm zerkleinert, gesiebt und entstaubt. Die derart hergestellten Calciumsilikathydratgranulat-Körner werden über ein Förderband in gleichmässiger schräggestellter Dosierschnecke (Neigungsgrad etwa 40%) gefördert.

An der Übergangsstelle vom Förderband in die Dosierschnecke wird mittels einer Sprühdüse eine saure Lösung auf die Oberfläche der Calciumsilikatgranulatkörner gesprüht.

Als Sprühlösung wird eine Lösung bestehend aus 31 Gew.-% einer 85%igen Phosphorsäurelösung, gemischt mit 69 Gew.-% einer eine Dichte von 1,3 bis 1,34 und einen pH-Wert zwischen 2 und 3,5 aufweisenden Aluminiumsulfatlösung eingesetzt.

Durch laufende Produktkontrolle des Endproduktes wird die Menge aufzusprühender Flüssigkeit geregelt, so dass das Fertigprodukt einen pH-Wert zwischen 5,8 und 6,2 aufweist.

Nach Durchlaufen der Dosierschnecke, in der die Oberfläche der Calciumsilikathydratgranulatkörner gleichmässig benetzt wird, wird das behandelte Granulat in einen Trommeltrockner überführt. Bei einer Trocknungstemperatur von etwa 210°C wird auf eine Restfeuchte im Endprodukt von weniger als 10% getrocknet.

Das derart hergestellte behandelte Calciumsilikathydratgranulat weist für Katzenurin bekannten Tierstreumaterialien überlegene Eigenschaften auf.

Neben den in dem obigen Beispiel genauer beschriebenen Verfahren zur Herstellung von Katzenstreu können auch andere Säuren bzw. Salze zur Erzielung eines sauren pH-Werts eingesetzt werden.

Weiterhin ist es möglich, die Ansäuerung derartiger Substanzen durch Behandeln mit sauren Gasen, beispielsweise Schwefeltrioxid, Salzsäure-Gas oder gasförmigen anderen Säuren durchzuführen, was gegebenenfalls bei Vorhandensein derartiger saurer Gase aus anderen chemischen Prozessen kostengünstig durchführbar ist.

## Patentansprüche

1. Verfahren zum Herstellen von Katzenstreu aus oder in Verbindung mit porösem Calciumsilikathydratgranulat und/oder -pulver, welches durch Umsetzen von kristallinem und ggf. amorphen Siliziumdioxid bzw. bieses oder diese enthaltenden Materialien mit Calciumoxid bzw. dieses enthaltendem Material in einem Molverhältnis von CaO zu $SiO_2$ von 0,8:1 bis 1,1:1 unter Homogenisieren derselben in Wasser und Formen, Autoklavenhärten, Zerkleinern, Trocknen und Klassieren mit der weiteren Maßgabe, daß das Homogenisieren bei der Umsetzung durch Dispergieren der festen Ausgangsstoffe im Wasser unter Zugabe einer vorher in Wasser in einen mikroporigen stabilen Schaum überführten anionenaktiven grenzflächenaktiven Substanz durchgeführt wird, erzeugt wird, dadurch gekennzeichnet, daß das Calciumsilikathydratgranulat und/oder -pulver mit gasförmigen und/oder flüssigen bzw. in Flüssigkeit gelösten sauren Verbindungen und/oder Mischungen derselben so behandelt wird, daß der resultierende pH-Wert zwischen 5,8 and 6,2 liegt.

2. Verfahren nach einem der Anspruche 1, dadurch gekennzeichnet, daß das Calciumsilikatgranulat und/oder -pulver mit gasförmigen sauren Verbindungen, wie HCl, $SO_3$, $H_3CCOOH$ oder diese aufweisenden Gasmischungen, behandelt wird.

3. Verfahren nach einem der Ansprüche 1 oder 2, dadurch gekennzeichnet, daß das Calciumsilikatgranulat und/oder -pulver mit flüssigen sauren Verbindungen, insbesondere konzentrierten und vedünnten Säuren und gelösten, sauer reagierenden Salzen oder Mischungen derselben behandelt wird.

4. Verfahren nach Anspruch 3, dadurch gekennzeichnet, daß das Calciumsilikatgranulat und/oder -pulver mit der sauren Flüssigkeit besprüht und anschließend getrocknet wird.

5. Verfahren nach Anspruch 4, dadurch gekennzeichnet, daß entstaubtes, klassifiziertes Calciumsilikatgranulat bei einer Granulattemperatur zwischen etwa 20 bis 30°C und einer Produktfeuchte von etwa 25% während des freien Falls in einer Dosierschnecke mit der sauren Lösung besprüht, in der Dosierschnecke gleichmäßig benetzt und anschließend auf eine Restfeuchte von weniger als 10% getrocknet wird.

6. Verfahren nach Anspruch 5, dadurch gekennzeichnet, daß als saure Lösung eine Mischung von 31 Gew.-% 85%iger Phosphorsäurelösung und 69 Gew.-% einer eine spezifische Dichte von 1,3 bis 1,34 und einen pH-Wert von 2 bis 3,5 aufweisenden Aluminiumsulfatlösung eingesetzt wird.

7. Verfahren nach Anspruch 5 oder 6, dadurch gekennzeichnet, daß das Trocknen des Produkts in einem Trommeltrockner bei einer Trocknungstemperatur von etwa 210°C erfolgt.

## Revendications

1. Procédé de fabrication d'une litière pour chats, constituée de ou comprenant un granulé et/ou poudre d'hydrate de silicate de calcium qui est obtenu par réaction de bioxyde de silicium cristallin et, éventuellement, amorphe ou de matériaux contenant celui-ci ou ceux-ci en proportion molaire de CaO par rapport à $SiO_2$ de 0,8/1 à 1,1/1, en homogénéisant ceux-ci dans de l'eau, mettant en forme, durcissant en autoclave, broyant, séchant et classant, sous la condition que l'homogénéisation lors de la réaction soit effectuée par dispersion de la matière de départ solide dans l'eau, en ajoutant une substance tensio-active, à activité anionique, transformée d'abord dans de l'eau en une matière alvéolaire stable microporeuse, caractérisé par le fait que le granulé et/ou poudre d'hydrate de silicate de calcium est traité avec des composés acides gazeux et/ou liquides ou dissous dans du liquide et/ou des mélanges de ceux-ci, de manière que le pH résultant est compris entre 5,8 et 6,2.

2. Procédé selon la revendication 1, caractérisé en ce qu'on traite le granulé et/ou poudre de silicate de calcium avec des composés acides gazeux tels que HCl, $SO_3$, $H_3COOH$ ou des mélanges gazeux comprenant ces composés.

3. Procédé selon l'une des revendications 1 ou 2, caractérisé en ce qu'on triate le granulé et/ou poudre de silicate de calcium avec des composés acides liquides, en particulier des acides concentrés et dilués, des sels dissous donnant lieu à une réaction acide ou des mélanges de ces composés.

4. Procédé selon la revendication 3, caractérisé en ce qu'on asperge le grnaulé et/ou poudre de silicate de calcium avec le liquide acide puis on le sèche.

5. Procédé selon la revendication 4, caractérisé en ce qu'on asperge, avec la solution acide, pendant sa chute dans une vis sans fin de dosage, le granulat de silicate de calcium dépoussiéré, criblé, maintenu à une température comprise entre 20 et 30°C et possédant un taux d'humidité d'environ 25%, on le mouille de façon régulière dans cette vis sans fin de dosage et ensuite on le sèche jusqu'à un taux d'humidité résiduel inférieur à 10%.

6. Procédé selon la revendication 5, caractérisé en ce que la solution acide est un mélange de 31% en poids d'une solution d'acide phosphorique à 85% et de 69% en poids d'une solution de sulfate d'aluminium possédant une masse spécifique de 1,3 à 1,34 et un pH de 2 à 3,5.

7. Procédé selon la revendication 5 ou 6, caractérisé en ce qu'on effectue le séchage du produit dans un sécheur à tambour, à une température d'environ 210°C.

**Claims**

1. A process for the production of cat's litter from or in conjunction with porous calcium silicate hydrate granulate and/or powder, which is produced by reacting crystalline and possibly amorphous silicon dioxide or materials containing the same with calcium oxide or material containing the same, in a CaO to $SiO_2$ molar ratio of 0.8:1 to 1.1:1 with homogenization thereof in water and moulding, autoclave curing, comminuting, drying and grading, with the additional proviso that homogenization is effected during the reaction by dispersion of the solid raw materials in water with the addition of an anion-active interface-active substance previously converted to a microporous stable foam in water, characterised in that the calcium silicate hydrate granulate and/or powder is so treated with gaseous and/or liquid acidic compounds or such compounds dissolved in liquid, and/or mixtures thereof, that the resulting pH is between 5.8 and 6.2.

2. A process according to claim 1, characterised in that the calcium silicate granulate and/or powder is treated with gaseous acid compounds such as HCl, $SO_3$, $H_3COOH$ or gas mixtures containing them.

3. A process according to claim 1 or 2, characterised in that the calcium silicate granulate and/or powder is treated with liquid acid compounds, more particularly concentrated and diluted acids and dissolved acid-reacting salts or mixtures thereof.

4. A process according to claim 3, characterised in that the calcium silicate granulate and/or powder is sprayed with the acid liquid, then dried.

5. A process according to claim 4, characterised in that dust-free graded calcium silicate granulate at a temperature of between approximately 20 and 30°C and with a moisture content of approximately 25% is sprayed with the acid solution in free fall into a metering screw, wetted uniformly therein, then dried to a residual moisture content of less than 10%.

6. A process according to claim 5, characterised in that a mixture consisting of 31 weight% of 85% phosphoric acid solution and 69 weight% of an aluminium sulphate solution having a specific density of 1.3 to 1.34 and a ph value of 2 to 3.5 is used as acid solution.

7. A process according to claim 5 or 6, characterised in that the product is dried in a drum dryer at a drying temperature of approximately 210°C.